# EUROPÄISCHE PATENTSCHRIFT

(11) **EP 2 081 735 B1**
(45) Veröffentlichungstag und Bekanntmachung des Hinweises auf die Patenterteilung: **29.08.2018**
(21) Anmeldenummer: 07819333.1
(22) Anmeldetag: 25.10.2007
(51) Int. Cl.: B25B 13/48, B25B 23/142, B23B 31/20

(54) **VORRICHTUNG ZUM ANZIEHEN UND LÖSEN VON SPANNZEUGEN**
DEVICE FOR TIGHTENING AND RELEASING CLAMPING TOOLS
DISPOSITIF POUR SERRER ET DESSERRER DES OUTILS DE SERRAGE

(30) Priorität: 26.10.2006 DE 102006050632; 14.09.2007 DE 102007043889
(43) Veröffentlichungstag der Anmeldung: 29.07.2009
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE); KÜGLER, Wolfgang, 86551 Aichach-Griesbeckerzell (DE)
(74) Vertreter: Bockhorni & Kollegen
(86) Internationale Anmeldenummer: PCT/EP2007/009285
(87) Internationale Veröffentlichungsnummer: WO 2008/049622

(56) Entgegenhaltungen:
- EP-A- 0 637 484
- DE-A1- 3 804 043
- DE-C- 929 840
- FR-A- 1 176 761
- FR-A- 2 814 101
- GB-A- 293 529
- US-A- 2 171 872
- US-A- 2 283 888
- US-A- 2 394 808
- US-A- 2 803 133

## Beschreibung

Die vorliegende Erfindung betrifft eine Vorrichtung zum Anziehen und Lösen von Spannzeugen nach dem Oberbegriff von Anspruch 1 und einen Schlüsseleinsatz für eine solche Vorrichtung nach dem Oberbegriff von Anspruch 16.

Es sind verschiedene Spannzeuge, wie Spannzangenfutter und Spanndorne bekannt, bei denen Gegenstände, wie Werkzeuge oder Werkstücke, spannend fixiert werden. Bei Spannzangenfuttern sind beispielsweise SK, HSK- und Polygonwerkzeugaufnahmen bekannt, wie ER- oder OZ-Systeme. Solche Spannzeuge weisen dabei einen Grundkörper mit einer Spannzange auf und ein Spannmittel, wie eine Spannmutter bei Spannfuttern, eine Spannschraube bei Spanndornen oder dgl., die auf den Grundkörper geschraubt wird, wodurch die Spannzange verspannt wird. Bezüglich der genauen Ausgestaltung eines Spannzangenfutters wird auf die DE 10 2006 050 632.4 verwiesen, deren gesamter Offenbarungsgehalt mit in diese Beschreibung aufgenommen wird.

Der vorliegenden Erfindung liegt die Aufgabe zugrunde, eine Vorrichtung zum Anziehen und Lösen von Spannzeugen bereit zu stellen, mit deren Hilfe sich das Drehmoment zentrisch übertragen lässt und dabei das Gewinde der Spannzangenaufnahme und dgl. und des Spannmittels nicht einseitig belastet wird. Dabei soll die Vorrichtung insbesondere universell einsetzbar und einfach aufgebaut sein.

Die FR 1 176 761 A, die EP 0 637 484 A1 und die US 2 394 808 A offenbaren Vorrichtungen nach dem Oberbegriff von Anspruch 1, bei denen keine Bestimmung des Drehmomentes und keine schwenkbare Lagerung des Schlüsseleinsatzes vorgesehen sind.

Die Aufgabe der Erfindung wird gelöst mit einer Vorrichtung gemäß Anspruch 1 und einem Schlüsseleinsatz nach Anspruch 16. Vorteilhafte Ausgestaltungen sind in den jeweils abhängigen Unteransprüchen angegeben.

Die erfindungsgemäße Vorrichtung weist mindestens zwei in Bezug auf die Drehachse der Vorrichtung bzw. eine durch die Drehachse der Vorrichtung verlaufende Ebene symmetrisch angeordnete Griffe für die Betätigung auf. Außerdem ist die Vorrichtung so an die Außenumfangskontur des Spannmittels angepasst, dass beim Drehen der Vorrichtung ein Drehmoment auf das Spannmittel zum Anziehen oder Lösen des Spannmittels gegenüber dem Grundkörper des Spannzeugs bereitgestellt wird. Diese Vorrichtung erlaubt das präzise Verdrehen des Spannmittels unter Aufbringung eines Drehmoments bei gleichzeitiger Verhinderung von Querkräften, die sonst zu einer Verkippung des Spannmittels und damit der Spannzange innerhalb des Spannzeugs führen und so die Rundlaufgenauigkeit des Spannzeugs herabsetzen können. Außerdem ist durch die Verhinderung von Querkräften auch sichergestellt, dass die Gewinde der Spannzangenaufnahme bzw. des Spannzeuggrundkörpers und des Spannmittels nicht einseitig belastet werden.

Wenn die Griffe in einer Ebene angeordnet sind, in der auch das Spannmittel liegt, wenn also die Wirkungslinie der gegenüberliegenden Handgriffe sowohl die Drehachse kreuzt als auch das Spannmittel, ist bei beidhändiger Betätigung der Vorrichtung das querkraftfreie Anziehen und Lösen automatisch sichergestellt.

Wenn bei dieser Ausgestaltung allerdings eine einhändig Bedienung erfolgt oder eine Bedienung, bei der beiden Griffe mit unterschiedlicher Kraft beaufschlagt werden, ist das querkraftfreie Anziehen unter ausschließlicher Aufbringung eines Drehmoments nicht sichergestellt.

Daher kann es vorteilhaft sein, wenn die Ebene, in der die Griffe angeordnet sind, nicht durch das Spannmittel geht, wenn also die Griffe in einer Ebene angeordnet sind, die oberhalb oder unterhalb des Spannmittels liegt. So sind die Griffe in Bezug auf das Spannmittel im Rahmen einer Kröpfung axial versetzt. Dadurch wird die Vorrichtung bei nur einseitiger Handhabung oder unsymmetrischer Handhabung, d.h. Handhabung mit unterschiedlichem Kraftaufwand auf den jeweiligen Griff, von dem Spannmittel abrutschen. Die Vorrichtung kann so also nur beidhändig und symmetrisch bedient werden, was solche Handhabungsfehler vermeidet. Es ist zur Übertragung des Drehmoments auf das Spannmittel ein herausnehmbarer Schlüsseleinsatz vorgesehen. Mit diesem Schlüsseleinsatz ist die Vorrichtung universell einsetzbar, da sie an verschiedene Spannmittel angepasst werden kann. So können mit einer einzigen Vorrichtung verschiedene Spannzeuge gelöst und angezogen werden.

Zweckmäßig ist der Schlüsseleinsatz in einer ringnutartigen Vertiefung in der Vorrichtung angeordnet, wobei die ringnutartige Vertiefung insbesondere rings einer kreissegmentförmigen Ausnehmung ausgebildet ist. So liegt eine konstruktiv sehr einfache Verbindung von Vorrichtung und Schlüsseleinsatz vor.

Vorteilhaft ist der Schlüsseleinsatz mittels mindestens einer Schraub- oder Steckverbindung in der Vorrichtung festgelegt. Der Austausch des Schlüsseleinsatzes kann so sehr schnell erfolgen, insbesondere wenn die Verbindung als Steckverbindung ausgeführt ist.

Eine sehr sichere Verbindung wird erzielt, wenn die Schraub- bzw. Steckverbindung den Schlüsseleinsatz und die ringnutartige Vertiefung zumindest teilweise durchgreift.

Besonders einfach und schnell kann die Verbindung gelöst und wieder hergestellt werden, wenn die Steckverbindung ein clipartiges Element mit einem Bolzen umfasst, wobei das clipsartige Element in einer entsprechende Vertiefung der Vorrichtung herausnehmbar angeordnet ist.

Damit die Steckverbindung sich nicht selbständig lösen kann, ist es zweckmäßig, wenn zwischen dem clipsartigen Element und der Vorrichtung eine Rastverbindung vorgesehen ist, die insbesondere durch ein federgelagertes Kugelelement, einen Gummi oder dgl. bereitgestellt wird. In diesem Fall muss dann beim Entnehmen des clipsartigen Elements der Widerstand einer vorstehenden Kugel oder eines vorstehenden Gummis überwunden werden, so dass eine Entnahme nur unter entsprechender Kraftaufbringung möglich ist.

Die Entnahme des clipsartigen Elements lässt sich vorteilhaft dadurch erleichtern, dass das clipsartige Element im Zusammenhang mit der korrespondierenden Vertiefung in der Vorrichtung ein Griffelement ausbildet, mit dessen Hilfe das clipsartige Element aus der Vertiefung entnehmbar ist, wobei das clipsartige Element insbesondere L-förmig ausgebildet ist. Es ist die Steckverbindung exzentrisch zu Drehachse des Schlüsseleinsatzes angeordnet.

Besonders bevorzugt weist die Steckverbindung zwischen dem clipsartigen Element und der Vorrichtung eine Passung auf. Dadurch lässt sich der Schlüsseleinsatz reproduzierbar in der Vorrichtung anordnen. Es sind in der Vorrichtung Mittel zu Bestimmung des Drehmoments vorgesehen. Einer Überlastung der Gewinde oder einem zu geringen Anziehen der Spannmutter kann so vorgebeugt werden. Auf einfache Art und Weise wird das Mittel zur Bestimmung des Drehmoments dadurch ausgebildet, dass ein federnd gelagertes Element vorgesehen ist, das gegen den Schlüsseleinsatz wirkt. Dieses federnd gelagerte Element kann mittels einer Rundfeder, Tellerfeder, Spiralfeder, Blattfeder, einem Pneumatik- oder Hydraulikzylinder federnd gelagert sein.

Zur Anzeige des Drehmoments kann das Mittel zur Bestimmung des Drehmoments eine mechanische oder elektronische Messuhr umfassen. Die Messuhr kann dabei eine Anzeige des aktuellen Drehmoments oder eine Anzeige der maximal zulässigen Drehmomente für verschiedene Spanndurchmesser und Spannsystemgrößen aufweisen. Vorteilhaft sind dabei mehrere Skalen für verschiedene Spannsysteme vorgesehen. Bevorzugt sind die Skale und/oder die Messuhr auswechselbar angeordnet. Bei einer elektronischen Messuhr kann die Skale umschaltbar ausgelegt sein.

Alternativ kann das Mittel zur Bestimmung des Drehmoments einen Druckaufnehmer umfassen, der pneumatisch, hydraulisch oder elektronisch ausgebildet ist. Die Vorrichtung lässt sich dadurch bei Nichtbenutzung besonders kompakt halten, wenn die Griffe von der Vorrichtung abnehmbar ausgebildet sind.

Selbständiger Schutz wird für einen Schlüsseleinsatz nach Anspruch 16 für die erfindungsgemäße Vorrichtung zum Anziehen und Lösen von Spannzeugen beansprucht,

Bevorzugt weist der Schlüsseleinsatz Vorsprünge auf, die angepasst sind, in entsprechende Vertiefungen von Spannmitteln, wie Spannmuttern, Spannschrauben und dgl. einzugreifen. Dann lässt sich das Drehmoment sehr sicher übertragen und es ist sichergestellt, dass nur der richtige Schlüsseleinsatz für das jeweilige Spannsystem und den Durchmesser des Spannmittels eingesetzt werden kann. Vorteilhaft weist der Schlüsseleinsatz eine exzentrische Bohrung auf zur Aufnahme eines Elementes für eine Steckverbindung mit der Vorrichtung.

In einer bevorzugten Ausgestaltung ist am Schlüsseleinsatz eine Anlagefläche für einen Druckaufnehmer oder ein federnd gelagertes Element vorgesehen. Bevorzugt ist weiterhin eine Anlagefläche für eine Messuhr vorgesehen.

Weitere Vorteile, Kennzeichen und Merkmale der vorliegenden Erfindung werden nun im Zusammenhang mit der Beschreibung der Zeichnung verdeutlicht werden.

Darin zeigen
- Fig. 1: eine bevorzugte Ausführungsform der erfindungsgemäßen Vorrichtung in einer Draufsicht,
- Fig. 2: die erfindungsgemäße Vorrichtung gemäß Fig. 1 in einer ersten Schnittdarstellung,
- Fig. 3: die erfindungsgemäße Vorrichtung gemäß Fig. 1 in einer zweiten Schnittdarstellung entlang der Linie C-C,

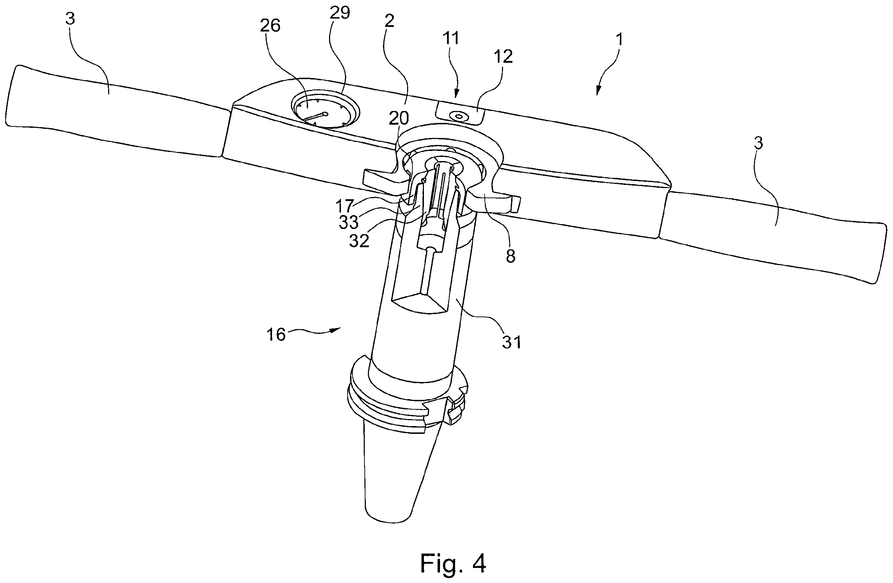

- Fig. 4: die erfindungsgemäße Vorrichtung gemäß Fig. 1 im Zusammenwirken mit einem Spannzeug und
- Fig. 5: eine bevorzugte Ausführungsform der Skale einer Messuhr der Vorrichtung.

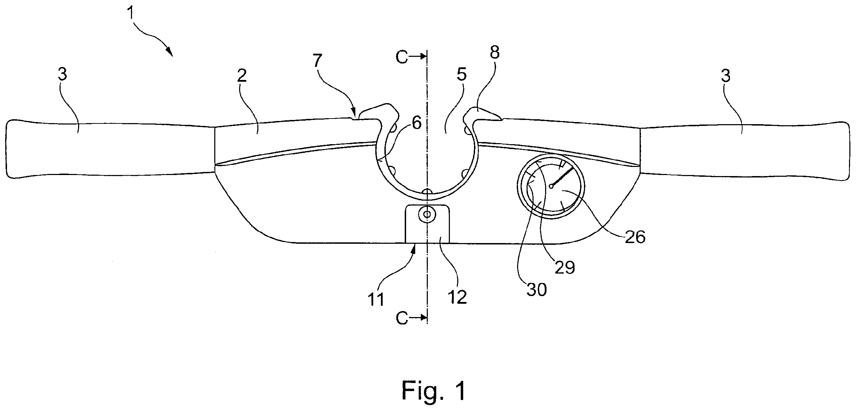

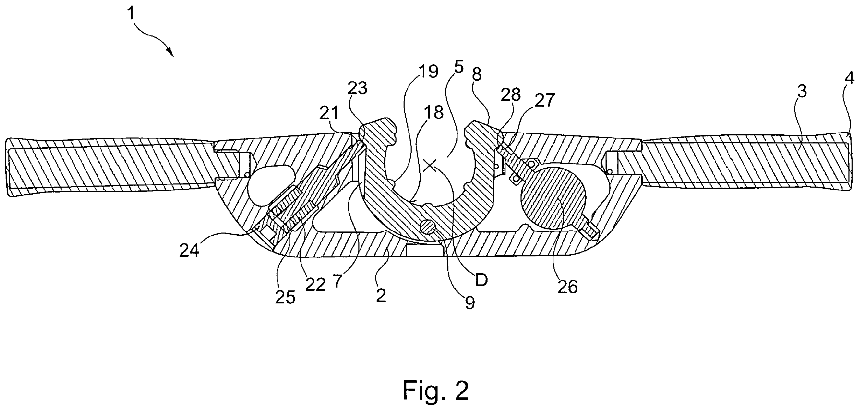

In Fig. 1 ist rein schematisch eine bevorzugt Ausführungsform der erfindungsgemäßen Vorrichtung 1 zum Anziehen und Lösen von Spannzeugen in einer Draufsicht abgebildet, wozu Fig. 2 eine Schnittdarstellung zeigt. Die Vorrichtung 1 umfasst ein metallisches Gehäuse 2, an dem gegenüberliegend zwei Handgriffe 3 angebracht sind, die mit einer Gummierung 4 zur Erhöhung des Betätigungskomforts versehen sind.

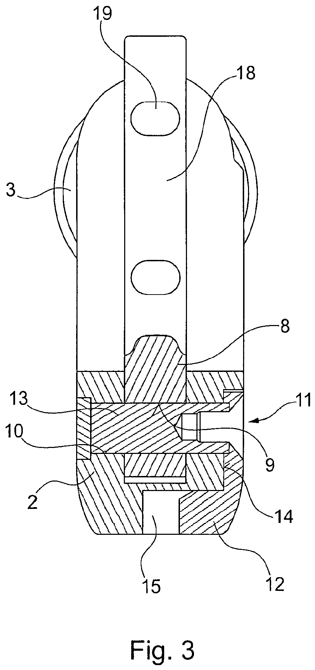

Das Gehäuse 2 weist eine vorzugsweise kreissegmentartige Ausnehmung 5 auf, in deren Umfangsfläche 6 eine Nut 7 angeordnet ist, die zur Aufnahme eines Schlüsseleinsatzes 8 dient. Dieser Schlüsseleinsatz 8 ist mit dem Gehäuse 2 über eine Verbindung gekoppelt, die hier als Steckverbindung ausgestattet ist. Hierzu weist, wie besonders deutlich aus Fig. 3 hervorgeht, der Schlüsseleinsatz 8 eine Durchgangsbohrung 9 auf und das Gehäuse 2 eine korrespondierende Bohrung 10. Weiterhin ist ein clipsartiges Element 11 vorgesehen, das einen L-förmigen Clip 12 und einen Bolzen 13 für die Steckverbindung aufweist. Der Clip 12 ist in einer Ausnehmung oder Vertiefung 14 des Gehäuses 2 angeordnet, wobei der Bolzen 13 die Bohrungen 9, 10 durchdringt.

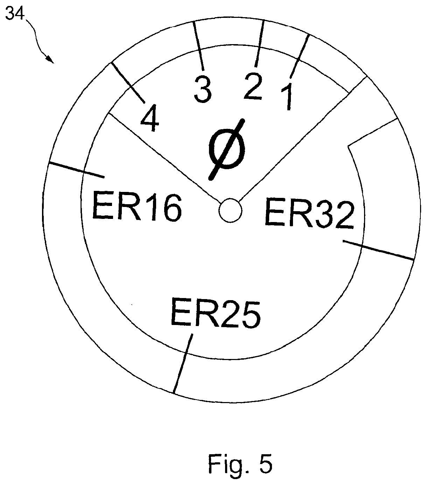

Aufgrund der Passform zwischen Bolzen 13 und den Bohrungen 9, 10 erfolgt eine reproduzierbare Anordnung des Schlüsseleinsatzes 8 in dem Gehäuse 2. Dadurch, daß der Clip 12 die Vertiefung 14 im Bereich 15 nicht vollständig ausfüllt, kann das clipsartige Element 11 leicht manuell hintergriffen und damit aus dem Gehäuse 2 gezogen werden. Damit wird ein Schnellwechselsystem für verschiedene Schlüsseleinsätze 8 bereitgestellt, um die Vorrichtung 1 an verschiedene Spannzeuge 16 und deren Spannmuttern 17 (vgl. Fig. 5) u. dgl. anzupassen. Dazu sind an einer Innenumfangsfläche 18 des Schlüsseleinsatzes 8 entsprechende Vorsprünge 19 vorgesehen, die mit entsprechenden Vertiefungen 20 der Spannmutter 17 korrespondieren, um auf die Spannmutter 17 ein Drehmoment übertragen zu können. Dabei kann die Spannmutter die unterschiedlichsten Außenkonturen aufweisen solange diese eine Übertragung eines Drehmoments über den dazu angepassten Schlüsseleinsatz 8 zulassen.

Der Schlüsseleinsatz 8 weist eine ringsegmentartige Gestalt auf, d.h. er ist seitlich geöffnet. Dadurch kann die Vorrichtung 1 mit dem Schlüsseleinsatz 8 von der Seite an die Spannmutter 17 herangeführt werden und es ist nicht notwendig, den Schlüsseleinsatz 8 über ein im Spannzangenfutter 16 eingespanntes Werkzeug (nicht gezeigt) ein- oder auszufädeln. Der gleiche Vorteil gilt natürlich auch für Spanndorne mit ihren Spannschrauben.

Zur Bestimmung des mit der Vorrichtung 1 auf die Spannmutter 17 aufgebrachten Drehmoments ist in dem Gehäuse weiterhin ein Druckbolzen 21 vorgesehen, der federnd gegenüber dem Gehäuse 2 mittels einer Rundfeder 22 gelagert ist. Der Druckbolzen 21 liegt an dem Schlüsseleinsatz 8 an einer ersten Anlagefläche 23 an. Über eine Einstellschraube 24 und eine Druckscheibe 25, gegenüber der sich die Rundfeder 22 abstützt, kann die Lage des Druckbolzens 21 vorgegeben werden.

Gegenüberliegend von dem Druckbolzen 21 ist in dem Gehäuse 2 eine Messuhr 26 vorgesehen, deren Taster 27 an einer zweiten Anlagefläche 28 des Schlüsseleinsatzes 8 anliegt. Über einen Fensterdurchbruch 29 in dem Gehäuse 2 kann die Messuhr 26 abgelesen werden.

Beim Aufbringen eines Drehmoments in Anziehrichtung auf die Spannmutter 17 mittels der Vorrichtung 1 wird der Schlüsseleinsatz, der gegenüber dem Bolzen 13 schwenkbar gelagert ist, um den Bolzen 13 gegen den Druckbolzen 21 gedrückt und wirkt somit gegen die Kraft der Rundfeder 22. Die Eindrücktiefe des Druckbolzens 21 in das Gehäuse 2 stellt somit ein Maß für das aufgebrachte Drehmoment dar, das durch geeignete Umrechung daher direkt auf der Messuhr 26 abgelesen werden kann, wo sich die zweite Anlagefläche 28 von der Messuhr 26 wegbewegt und so der Taster 27 sich aus der Messuhr 26 um eine bestimmte Strecke herausbewegen kann.

Statt zweier Griffe 3 kann die Vorrichtung 1 auch beispielsweise in Form eines Lenkrades ausgebildet sein, wobei dann unendlich viele Griffe symmetrisch zur Drehachse bzw. einer durch die Drehachse verlaufenden Ebene angeordnet sind. Auch bei einer solchen Ausgestaltung mit mehr als zwei Griffen, lässt sich eine querkraftfreie Drehmomentübertragung sicherstellen.

Auf der Messuhr 26 sind bevorzugt Markierungen 30 für die maximal erlaubte Anzugskraft der jeweiligen Spannzangensysteme 16 - im Beispiel ER 16, ER 25 und ER32 - und ebenso für die maximal erlaubte Anzugskraft für kleine Spannzangendurchmesser - im Beispiel Durchmesser von 0,5 bis 4 - angegeben (vgl. Fig. 5), so dass eine Überlastung aber auch ein zu geringes Anziehen der Spannmutter 17 erkennbar ist.

Aufgrund der symmetrischen Anordnung der Handgriffe 3 in Bezug auf den Mittelpunkt des Schlüsseleinsatzes 8, der auf der Drehachse D der Vorrichtung 1 liegt, wobei der Mittelpunkt also auf einer Verbindungslinie der beiden Handgriffe 3 liegt, wird das über den Schlüsseleinsatz 8 vermittelte Drehmoment zentrisch in die Spannmutter 17 eingeleitet, wobei keine Querkräfte auftreten. Dadurch werden einseitige Belastungen der Gewinde von Spannmutter 17 und Spannzeuggrundkörper 31 verhindert und sicher gestellt, dass die Spannzange 32 exakt axial in die Spannzangenaufnahme 33 eingepresst wird.

Die Handgriffe 3 sind dabei in einer Ebene angeordnet, in der auch die Spannmutter 17 sich befindet. Ein querkraftfreies Anziehen ist hier gewährleistet, wenn beide Griffe mit gleicher Kraft angezogen werden. Um ein einseitig zu starkes Anziehen oder auch gänzlich einseitiges, nämlich einhändiges Anziehen grundsätzlich zu verhindern, kann vorgesehen sein, dass die Ebene, in der die Handgriffe angeordnet sind, oberhalb oder unterhalb der Spannmutter mit einer axialen Beabstandung verläuft (nicht gezeigt), wodurch aufgrund der Kröpfung bei nicht gleichmäßigem Anzug eine Verkippung der Vorrichtung bewirken würde, die den Fehler augenscheinlich macht.

Anstelle der Rundfeder 22 kann auch eine Tellerfeder, Spiralfeder, Blattfeder, ein Pneumatik oder Hydraulikzylinder eingesetzt werden solange diese Elemente eine genügend große Gegenkraft für das aufzubringende Drehmoment bereitstellen. Alternativ kann auch das Gehäuse selbst als federndes Element dienen. Das System zur Drehmomentbestimmung kann dabei entweder als Drucksystem oder als Zugsystem ausgebildet sein, d.h. es kann Drehmomente beim Drehen gegen oder mit dem Uhrzeigersinn (wie dargestellt) bestimmen. Bei doppelter Auslegung, also Übereinanderanordnung (nicht gezeigt) von jeweils einem Druckbolzen 21 und einer Messuhr 26 kann auch eine beidseitige Bestimmung vorgenommen werden.

Die Messuhr 26 selbst kann, wie abgebildet mechanisch arbeiten oder auch elektronisch. Dabei kann sie, wie abgebildet, nachlaufend arbeiten oder direkt messend. Statt der maximalen Drehmomente kann die Anzeige der Messuhr 26 auch die direkt bestimmten Drehmomente anzeigen, wobei dann auf dem Gehäuse 2 zweckmäßig eine Tabelle für die maximal zulässigen Drehmomente vorgesehen ist. Die Skale 34 kann, wie in Fig. 5 dargestellt, auswechselbar in der Messuhr 26 angeordnet sein oder sie kann bei elektronischen Messuhren umschaltbar ausgeführt sein. Es können auch mehrere Skalen für verschiedene Spannzeugsysteme gleichzeitig abgebildet sein.

Alternativ zur Bestimmung über Druckbolzen 21 und Messuhr 26 kann auch ein Druckaufnehmer vorgesehen sein, der elektronisch, pneumatisch oder hydraulisch ausgebildet sein kann.

Aus den vorstehenden Ausführungen ist klar geworden, dass mit der vorliegenden Erfindung eine Vorrichtung 1 zum Anziehen und Lösen von Spannzeugen 16 bereitgestellt wird, mit der sich ein Drehmoment auf eine Spannmutter 17 zentrisch übertragen lässt. Dabei werden die Gewinde der Spannmutter 17 und der Spannzangenaufnahme 31 und dgl. nicht einseitig belastet. Außerdem ist die Vorrichtung 1 universell einsetzbar, besonders einfach aufgebaut und lässt sich sehr schnell an die jeweiligen Spannzeuge 16 anpassen.

## Patentansprüche

1. Vorrichtung (1) zum Befestigen und Lösen von Spannzeugen, wie Spannzangenfuttern (16), Spanndornen und dgl., wobei das Spannzeug (16) ein Spannmittel, wie Spannmutter (17), Spannschraube oder dgl., und einen Grundkörper (31) mit einem Gegengewinde zum Gewinde des Spannmittels (17) aufweist, wobei
die Vorrichtung (1) mindestens zwei in Bezug auf die Drehachse (D) der Vorrichtung (1) und/oder in Bezug auf eine durch die Drehachse (D) der Vorrichtung (1) verlaufende Ebene symmetrisch angeordnete Griffe (3) aufweist, wobei die Vorrichtung (1) so an die Außenumfangskontur des Spannmittels (17) angepasst ist, dass beim Drehen des Spannmittels (17) mit der Vorrichtung (1) ein Drehmoment zum Anziehen oder Lösen des Spannmittels (17) gegenüber dem Grundkörper (31) des Spannzeugs (16) bereitgestellt wird, und wobei zur Übertragung des Drehmoments auf das Spannmittel (17) ein herausnehmbarer Schlüsseleinsatz (8) vorgesehen ist und der Schlüsseleinsatz (8) eine seitliche Öffnung aufweist,
**dadurch gekennzeichnet, dass**
Mittel (21, 22, 26) zur Bestimmung des Drehmoments vorgesehen sind.

2. Vorrichtung nach Anspruch 1, **dadurch gekennzeichnet, dass** die Griffe in einer Ebene angeordnet sind, die oberhalb oder unterhalb des Spannmittels liegt.

3. Vorrichtung nach Anspruch 1 oder 2, **dadurch gekennzeichnet, dass** der Schlüsseleinsatz (8) in einer ringnutartigen Vertiefung (7) in der Vorrichtung (1) angeordnet ist, wobei die ringnutartige Vertiefung (7) insbesondere rings einer kreissegmentförmigen Ausnehmung (5) ausgebildet ist.

4. Vorrichtung nach einem der vorherigen Ansprüche, **dadurch gekennzeichnet, dass** der Schlüsseleinsatz (8) mittels mindestens einer Schraub- oder Steckverbindung in der Vorrichtung (1) festgelegt ist.

5. Vorrichtung nach Anspruch 4, **dadurch gekennzeichnet, dass** die Schraub- bzw. Steckverbindung den Schlüsseleinsatz (8) und die ringnutartige Vertiefung (7) zumindest teilweise durchgreift.

6. Vorrichtung nach Anspruch 4 oder 5, **dadurch gekennzeichnet, dass** die Steckverbindung ein clipartiges Element (11) mit einem Bolzen (13) umfasst, wobei das clipsartige Element (11) in einer entsprechende Vertiefung (14) der Vorrichtung (1) herausnehmbar angeordnet ist und der Schlüsseleinsatz insbesondere um den Bolzen (13) schwenkbar gelagert ist.

7. Vorrichtung nach Anspruch 6, **dadurch gekennzeichnet, dass** zwischen dem clipsartigen Element und der Vorrichtung eine Rastverbindung vorgesehen ist, die insbesondere durch ein federgelagertes Kugelelement, einen Gummi oder dgl. bereitgestellt wird.

8. Vorrichtung nach Anspruch 6 oder 7, **dadurch gekennzeichnet, dass** das clipsartige Element (11) im Zusammenhang mit der korrespondierenden Vertiefung (14) in der Vorrichtung (1) ein Griffelement (12) ausbildet, mit dessen Hilfe das clipsartige Element (11) aus der Vertiefung (14) entnehmbar ist, wobei das clipsartige Element (11) insbesondere L-förmig ausgebildet ist.

9. Vorrichtung nach einem der Ansprüche 5 bis 8, **dadurch gekennzeichnet, dass** die Steckverbindung exzentrisch zu Drehachse des Schlüsseleinsatzes (8) angeordnet ist.

10. Vorrichtung nach einem der Ansprüche 5 bis 9, **dadurch gekennzeichnet, dass** die Steckverbindung zwischen dem clipsartigen Element (11) und der Vorrichtung (1) eine Passung aufweist.

11. Vorrichtung nach Anspruch 1, **dadurch gekennzeichnet, dass** das Mittel zur Bestimmung des Drehmoments ein federnd gelagertes Element (21) umfasst, das gegen den Schlüsseleinsatz (8) wirkt.

12. Vorrichtung nach Anspruch 11, **dadurch gekennzeichnet, dass** das federnd gelagerte Element (21) mit einer Rundfeder (22), Tellerfeder, Spiralfeder, Blattfeder, einem Pneumatik- oder Hydraulikzylinder gelagert ist.

13. Vorrichtung nach einem der Ansprüche 9 bis 12, **dadurch gekennzeichnet, dass** das Mittel zur Bestimmung des Drehmoments eine mechanische oder elektronische Messuhr (26) umfasst, die insbesondere austauschbar angeordnet ist und bevorzugt mindestens eine Skale (34) zur Anzeige des Drehmoments oder des maximal erlaubten Drehmoments aufweist, wobei die Skale (34) austauschbar oder umschaltbar ausgebildet ist.

14. Vorrichtung nach Anspruch 1, **dadurch gekennzeichnet, dass** das Mittel zur Bestimmung des Drehmoments einen Druckaufnehmer umfasst, der pneumatisch, hydraulisch oder elektronisch ausgebildet ist.

15. Vorrichtung nach einem der vorherigen Ansprüche, **dadurch gekennzeichnet, dass** die Griffe (3) von der Vorrichtung (1) abnehmbar ausgebildet sind.

16. Schlüsseleinsatz (8) für eine Vorrichtung (1) zum Befestigen und Lösen von Spannzeugen, wie Spannzangenfuttern (16), Spanndornen und dgl., nach einem der vorherigen Ansprüche, wobei der Schlüsseleinsatz (8) eine seitliche Öffnung, insbesondere eine im Wesentlichen ringsegmentartige Gestalt aufweist, wobei der Schlüsseleinsatz (8) so an die Außenumfangskontur des Spannmittels (17) angepasst ist, dass beim Drehen des Spannmittels (17) mit dem Schlüsseleinsatz (8) um eine Drehachse (D) ein Drehmoment zum Anziehen oder Lösen des Spannmittels (17) gegenüber einem Grundkörper (31) des Spannzeugs (16) bereitgestellt wird, **dadurch gekennzeichnet, dass** der Schlüsseleinsatz (8) eine exzentrische zu der Drehachse (D) parallele Bohrung (9) aufweist zur Aufnahme eines Elementes (13) für eine Steckverbindung mit der Vorrichtung (1), wobei der Schlüsseleinsatz (8) auf dem Element (13) zur Messung eines Drehmomentes schwenkbar gelagert vorgesehen ist.

17. Schlüsseleinsatz nach Anspruch 16, **dadurch gekennzeichnet, dass** der Schlüsseleinsatz (8) Vorsprünge (19) aufweist, die angepasst sind, in entsprechende Vertiefungen (20) von Spannmitteln, wie Spannmuttern (17), Spannschrauben und dgl., einzugreifen.

18. Schlüsseleinsatz nach einem der Ansprüche 16 oder 17, **dadurch gekennzeichnet, dass** der Schlüsseleinsatz (8) eine Anlagefläche (23) für einen Druckaufnehmer oder ein federnd gelagertes Element (21) aufweist.

19. Schlüsseleinsatz nach Anspruch 18, **dadurch gekennzeichnet, dass** weiterhin eine Anlagefläche (28) für eine Messuhr (26) vorgesehen ist.

## Claims

1. A device (1) for clamping and unclamping clamping tools, such as collet chucks (16), mandrels and the like, with the clamping tool (16) having a clamping means, such as a clamping nut (17), clamping screw or the like, and a base body (31) with a counter thread with respect to the thread of the clamping means (17), with
the device (1) having at least two handles (3) which are arranged symmetrically with respect to the rotation axis (D) of the device (1) and/or with respect to a plane passing through the rotation axis (D) of the device (1), with the device (1) being adapted to the outer circumferential contour of the clamping means (17) such that when the clamping means (17) is rotated with the device (1), a torque for clamping or unclamping the clamping means (17) with respect to the base body (31) of the clamping tool (16) is provided, and with a removable key insert (8) being provided for transmitting the torque to the clamping means (17) and with the key insert (8) having a lateral opening,
**characterized in that**
means (21, 22, 26) for determining the torque are provided.

2. The device according to claim 1, **characterized in that** the handles are arranged in a plane which lies above or below the clamping means.

3. The device according to claim 1 or 2, **characterized in that** the key insert (8) is arranged in a ring-groove-like depression (7) in the device (1), with the depression (7) particularly being formed around a circle-segment-formed recess (5).

4. The device according to one of the preceding claims, **characterized in that** the key insert (8) is set by means of a screw or plug-in connection in the device (1).

5. The device according to claim 4, **characterized in that** the screw and/or plug-in connection at least partially reaches through the key insert (8) and the ring-groove-like depression (7).

6. The device according to claim 4 or 5, **characterized in that** the plug connection comprises a clip like element (11) with a bolt (13), with the clip like element (11) being removably arranged in a corresponding recess (14) of the device (1) and that the key insert is pivotably supported in particular around the bolt (13).

7. The device according to claim 6, **characterized in that** a lock-in connection is provided between the clip-like element and the device, with the connection particularly being provided by a spring-loaded roller element, a rubber or the like.

8. The device according to claim 6 or 7, **characterized in that** the clip-like element (11) forms a handle element (12) in connection with the corresponding recess (14) in the device (1), with the help of which the clip-like element (11) can be removed from the recess (14), with the clip-like element (11) being configured in particular in an L shape.

9. The device according to one of the claims 5 to 8, **characterized in that** the plug connection is arranged eccentrically with respect to the rotation axis of the key insert (8)

10. The device according to one of the claims 5 to 9, **characterized in that** the plug connection has a fit between the clip-like element (11) and the device (1).

11. The device according to claim 1, **characterized in that** the means for determining the torque comprises a spring-loaded element (21) which acts against the key insert (8).

12. The device according to claim 11, **characterized in that** the spring-loaded element (21) is supported with a round spring (22), a disc spring, a spiral spring, a leaf spring, a pneumatic or a hydraulic cylinder.

13. The device according to one of the claims 9 to 12, **characterized in that** the means for determining the torque comprises a mechanical or electronical dial gauge (26), which is arranged particularly exchangably and preferably has at least a scale (34) for displaying the torque or the maximum permitted torque, with the scale (34) being configured exchangably or switchably.

14. The device according to claim 1, **characterized in that** the means for determining the torque comprises a pressure transducer which is configured pneumatically, hydraulically or electronically.

15. The device according to one of the preceding claims, **characterized in that** the handles (3) are configured detachably from the device (1).

16. A key insert (8) for a device (1) for clamping and unclamping clamping tools, such as collet chucks (16), mandrels and the like, according to one of the preceding claims, with the key insert (8) having a lateral opening, having in particular substantially a ring segment like design, with the key insert (8) being adapted to the outer circumferential contour of the clamping means (17), such that when rotating the clamping means (17) with the key insert (8) around a rotation axis (D), a torque for clamping or unclamping the clamping means (17) with respect to a base body (31) of the clamping means (16) is provided, **characterized in that** the key insert (8) comprises a parallel bore hole (9) eccentrical to the rotation axis (D), for receiving the element (13) for a plug connection with the device (1), with the key insert (8) being provided on the element (13) in a pivotably supported way for measuring the torque.

17. The key insert according to claim 16, **characterized in that** the key insert (8) has projections (19) which are adapted such that they engage into corresponding recesses (20) of clamping means, such as clamping nuts (17), clamping screws and the like.

18. The key insert according to one of the claims 16 or 17, **characterized in that** the key insert (8) has a contact surface (28) for a pressure transducer or a spring-loaded element (21).

19. The key insert according to claim 18, **characterized in that** furthermore, a contact surface (28) is provided for a dial gauge (26).

## Revendications

1. Dispositif (1) destiné à fixer et desserrer des outils de serrage, tels que des pinces de serrage (16), des mandrins de serrage et équivalents, dans lequel l'outil de serrage (16) présente un moyen de serrage, tel qu'un écrou de serrage (17), une vis de serrage ou équivalent, et un corps de base (31) avec un filet correspondant au filet du moyen de serrage (17), dans lequel le dispositif (1) présente au moins deux poignées (3) disposées symétriquement par rapport à l'axe de rotation (D) du dispositif (1) et/ou par rapport à un plan s'étendant à travers l'axe de rotation (D) du dispositif (1), dans lequel le dispositif (1) est adapté au contour périphérique extérieur du moyen de serrage (17) de telle sorte que, lors de la rotation du moyen de serrage (17) avec le dispositif (1), un couple de rotation est appliqué pour serrer ou desserrer le moyen de serrage (17) vis-à-vis du corps de base (31) de l'outil de serrage (16), et dans lequel, pour la transmission du couple de rotation au moyen de serrage (17), un moyen d'insertion de clé (8) amovible est prévu et le moyen d'insertion de clé (8) présente une ouverture latérale,
**caractérisé en ce que**
des moyens (21, 22, 26) sont prévus pour déterminer le couple de rotation.

2. Dispositif selon la revendication 1, **caractérisé en ce que** les poignées sont disposées dans un plan qui se trouve au-dessus ou en dessous du moyen de serrage.

3. Dispositif selon la revendication 1 ou 2, **caractérisé en ce que** le moyen d'insertion de clé (8) est disposé dans le dispositif (1) dans un creux en forme de rainure annulaire (7), dans lequel le creux en forme de rainure annulaire (7) est configuré en particulier de manière annulaire à un évidement en forme de segment circulaire (5).

4. Dispositif selon une des revendications précédentes, **caractérisé en ce que** le moyen d'insertion de clé (8) est immobilisé dans le dispositif (1) à l'aide d'au moins une liaison par vis ou par connecteur.

5. Dispositif selon la revendication 4, **caractérisé en ce que** la liaison par vis ou par connecteur traverse le moyen d'insertion de clé (8) et le creux en forme de rainure annulaire (7) au moins en partie.

6. Dispositif selon la revendication 4 ou 5, **caractérisé en ce que** la liaison par connecteur comporte un élément en forme de clip (11) avec un boulon (13), dans lequel l'élément en forme de clip (11) est disposé de manière amovible dans un creux (14) correspondant du dispositif (1) et le moyen d'insertion de clé est monté pivotant en particulier autour du boulon (13).

7. Dispositif selon la revendication 6, **caractérisé en ce que**, entre l'élément en forme de clip et le dispositif, une liaison par encliquetage est prévue, laquelle est appliquée en particulier par le biais d'un élément de bille à ressort, d'un caoutchouc ou équivalent.

8. Dispositif selon la revendication 6 ou 7, **caractérisé en ce que** l'élément en forme de clip (11) forme, en relation avec le creux (14) correspondant, un élément de poignée (12) dans le dispositif (1) qui permet d'enlever l'élément en forme de clip (11) du creux (14), l'élément en forme de clip (11) étant en particulier configuré en forme de L.

9. Dispositif selon une des revendications 5 à 8, **caractérisé en ce que** la liaison par connecteur est disposée de manière excentrique par rapport à l'axe de rotation du moyen d'insertion de clé (8).

10. Dispositif selon une des revendications 5 à 9, **caractérisé en ce que** la liaison par connecteur présente un ajustement entre l'élément en forme de clip (11) et le dispositif (1).

11. Dispositif selon la revendication 1, **caractérisé en ce que** le moyen de détermination du couple de rotation comporte un élément à ressort (21) qui agit contre le moyen d'insertion de clé (8).

12. Dispositif selon la revendication 11, **caractérisé en ce que** l'élément à ressort (21) est monté avec un ressort rond (22), une rondelle Belleville, un ressort en spirale, un ressort à lames, un vérin pneumatique ou hydraulique.

13. Dispositif selon une des revendications 9 à 12, **caractérisé en ce que** le moyen de détermination du couple de rotation comporte un comparateur à cadran mécanique ou électronique (26) qui est disposée en particulier de manière échangeable et présente de préférence au moins un cadran (34) pour indiquer le couple de rotation ou le couple de rotation maximum autorisé, dans lequel le cadran (34) est configuré de manière à être échangeable ou commutable.

14. Dispositif selon la revendication 1, **caractérisé en ce que** le moyen de détermination du couple de rotation comporte un capteur de pression, qui est configuré de manière pneumatique, hydraulique ou électronique.

15. Dispositif selon une des revendications précédentes, **caractérisé en ce que** les poignées (3) sont configurées de manière à pouvoir être enlevées du dispositif (1).

16. Moyen d'insertion de clé (8) pour un dispositif (1) destiné à fixer et desserrer des outils de serrage, tels que des pinces de serrage (16), des mandrins de serrage et équivalents, selon une des revendications précédentes, dans lequel le moyen d'insertion de clé (8) présente une ouverture latérale, en particulier une configuration ayant sensiblement la forme d'un segment annulaire, dans lequel le moyen d'insertion de clé (8) est adapté au contour périphérique extérieur du moyen de serrage (17) de telle sorte que, lors de la rotation du moyen de serrage (17) avec le moyen d'insertion de clé (8) autour d'un axe de rotation (D), un couple de rotation est appliqué pour serrer ou desserrer le moyen de serrage (17) vis-à-vis du corps de base (31) de l'outil de serrage (16), **caractérisé en ce que** le moyen d'insertion de clé (8) présente un alésage parallèle (9) de manière excentrique à l'axe de rotation (D) pour recevoir un élément (13) pour une liaison par connecteur avec le dispositif (1), le moyen d'insertion de clé (8) étant prévu monté pivotant sur l'élément (13) pour mesurer un couple de rotation.

17. Moyen d'insertion de clé selon la revendication 16, **caractérisé en ce que** le moyen d'insertion de clé (8) présente des saillies (19) qui sont adaptées pour s'engager dans des creux (20) correspondants des moyens de serrage, tels que des écrous de serrage (17), des vis de serrage et équivalents.

18. Moyen d'insertion de clé selon une des revendications 16 ou 17, **caractérisé en ce que** le moyen d'insertion de clé (8) présente une surface d'appui (23) pour un capteur de pression ou un élément à ressort (21).

19. Moyen d'insertion de clé selon la revendication 18, **caractérisé en ce qu'**une surface d'appui (28) est en outre prévue pour un comparateur à cadran (26).
